# EUROPEAN PATENT SPECIFICATION

(11) **EP 0 320 298 B1**
(45) Date of publication and mention of the grant of the patent: **15.02.1995**
(21) Application number: 88311709.5
(22) Date of filing: 09.12.1988
(51) Int. Cl.: C08G 63/18, C08G 63/68, C09K 19/38

(54) **Liquid-crystalline, thermotropic aromatic polyesters**
Flüssigkristalline thermotrope aromatische Polyester
Polyesters aromatiques thermotropes sous forme de cristaux liquides

(30) Priority: 10.12.1987 IT 2293087
(43) Date of publication of application: 14.06.1989
(73) Proprietor: HIMONT ITALIA S.r.l., I-20121 Milano (IT)
(72) Inventor: Coassolo, Alfredo, I-28100 Novara (IT); Foa, Marco, I-28100 Novara (IT); Chapoy, L. Lawrence, I-28040 Lesa Novara (IT)
(74) Representative: Lamb, John Baxter

(56) References cited:
- US-A- 4 447 593
- US-A- 4 614 790
- CHEMICAL ABSTRACTS, vol. 111, no. 6, 7th August 1989, page 74, abstract no. 40877h, Columbus, Ohio, US; & JP-A-63 280 730
- CHEMICAL ABSTRACTS, vol. 101, no. 4, 23rd July 1984, page 13, abstract no. 24143d, Columbus, Ohio, US; & JP-A-59 30 821
- PATENT ABSTRACTS OF JAPAN, vol. 7, no. 7 (C-144)[1152], 12th January 1983; & JP-A-57 164 120

## Description

The present invention relates to liquid-crystalline, thermotropic aromatic polyesters. More particularly, the invention relates to such polyesters which are easily processible in the molten state and which have a mesogen group in their main chain.

Thermotropic polyesters, which hence show an optical anisotropy in the molten state, are well-known products and are described, for example, in British Polymer Journal (Dec. 1980), page 154: "Liquid Crystal Polymer"; Journal of Macromolecular Science - Chemistry (1984), page 1705: "Liquid Crystalline Aromatic Polyesters"; Die Angewandte Makromolekulare Chemie (1982), 109-110, page 1: "Rigid Chain Polymers"; Die Angewandte Makromolekulare Chemie (1986), 145-146, page 231: "Thermotropic Liquid Crystalline Polymers"; and Journal of Molecular Science Review (1986), C26(4), page 551: "Liquid Crystalline Polymers: A Novel State of Material".

The use of such polyesters make it possible to obtain high-tenacity fibres or moulded articles from the material in the molten state, such as, e.g., by injection-moulding, which articles have suitable characteristics of rigidity, hardness and toughness.

The polymers having the above properties are generally easily processible in the molten state, highly resistant to heat and oxidation and furthermore, thanks to their crystallinity, the polymers display high HDT (Heat Distortion Temperature) values and are highly resistant to attack by solvents.

Liquid-crystalline, thermotropic polyesters having the above mentioned chracteristics, and particularly suitable for preparing fibres or films are disclosed in US-A-4,447,593. These polyesters contain units derived from a dicarboxylic aromatic acid, possibly from a hydroxy-aromatic acid and from a phenol constituted by a hydroquinone mono-substituted with alkyl or aralkyl groups, respectively containing at least 5 or at least 7 carbon atoms. The mono-substituted hydroquinone can be used in admixture with up to 10 mol %, of another phenol which is hydroquinone itself, or hydroquinones substituted with a group different from the above-cited groups. Examples of these other substituted hydroquinones are methyl-, ethyl-, propyl- and tert-butyl-hydroquinone, and chloro- and bromo-hydroquinone. Furthermore, the mono-substituted alkyl- or aralkyl-hydroquinone can be used in admixture with up to 10 mol %, of other aromatic diols, such as resorcinol, 2,2.bis-(4-hydroxy-phenyl)-propane, bis(4-hydroxy-phenyl)-sulphone, 1,1-bis(4-hydroxy-phenyl)cyclohexane, 4,4′-dihydroxy-di-phenyl, and so forth.

In US-A-4,447,593, the possibility of using mixtures of mono-substituted alkyl- or aryl-hydroquinones is never mentioned, nor is there mentioned the possibility of using them in the presence of substantial amounts of corresponding di-substituted derivatives, which are generally formed in hydroquinone alkylation reactions.

Even if not explicitly stated, anyone skilled in the art will clearly understand that the di-substituted derivatives are not mentioned among the possible aromatic diols accompanying the mono-substituted hydroquinone, owing to the fact that these products,due to the steric hindrance by which they are affected, could lead to the disappearance of the liquid-crystalline properties of the end polymer.

In fact, it is known, for example from US-A-4,600,765, that when aralkyl-substituted hydroquinones, such as. e.g., (1-phenyl-ethyl)-hydroquinone, are used in the preparation of liquid crystalline, thermotropic polyesters, such a product should be preferably used at a purity higher than 96%, as computed relative to the mixture of mono- and di-substituted products.

We have now found that mixtures containing hydroquinones mono-substituted with aralkyl groups and, possibly, substantial amounts of corresponding di-substituted hydroquinones can be used in the preparation of liquid-crystalline, thermotropic, aromatic polyesters.

Accordingly, the invention provides liquid-crystalline, thermotropic, aromatic polyesters comprising:
a) units derived from one or more aromatic or cycloaliphatic dicarboxylic acids;
b) units derived from a mixture of at least two hydroquinones which are mono-substituted with aralkyl groups containing at least 7 carbon atoms; and
c) possibly, units derived from at least one hydroquinone which is di-substituted with aralkyl groups as defined under (b).

According to a preferred embodiment of the invention, the aralkyl groups, present as substituents on the hydroquinones, contain from 7 to 15 carbon atoms, and the aromatic or aliphatic dicarboxylic acid is present in an amount of at least 90 mol % in an isomeric form having mutually parallel or coaxial carboxy groups.

Examples of suitable dicarboxylic acids are terephthalic acid, chloro- and bromo-terephthalic acid, methyl-terephthalic acid, 1,4-naphthalene-dicarboxylic acid, 1,5-naphthalene-dicarboxylic acid, 2,6-naphthalene-dicarboxylic acid, 4,4′-di-phenyl-dicarboxylic acid, 3,3′-dibromo-4,4′-di-phenyl-dicarboxylic acid, 4,4′-stilbene-dicarboxylic acid, cyclohexane-dicarboxylic acid, and so forth.

Any hydroquinones, mono- or di-substituted with aralkyl groups, can be used in the preparation of the aromatic polyesters of the invention, although (1-phenyl-ethyl)-hydroquinone, 2,5-bis(phenyl-ethyl)hydroquinone, 2-(alpha-phenyl-isopropyl)-hydroquinone, 2,5-bis(alpha-phenyl-isopropyl)-hydroquinone are preferred.

According to a further preferred embodiment of the invention, the units derived from the dicarboxylic acid are in an equimolar ratio to the units derived from the mono- and di-substituted hydroquinones as defined under (b) and (c). The mixture of the hydroquinones as defined under (b) is such as to contain substantial amounts, and, preferably, equimolar amounts, of the individual components, whilst the molar ratio, (c)/(b), of units as defined under (c) to the units as defined under (b), is suitably from 0 to 4, preferably from 0.05 to 2.5, and more preferably from 0.1 to 2.5.

Particularly preferred thermotropic polymers are those which comprise the following repeating units: 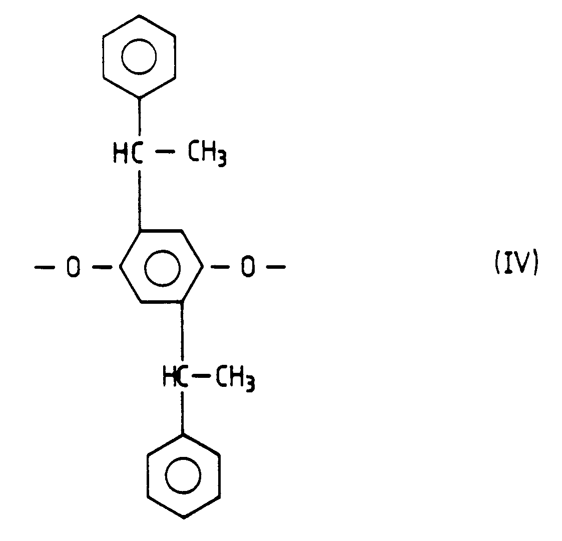 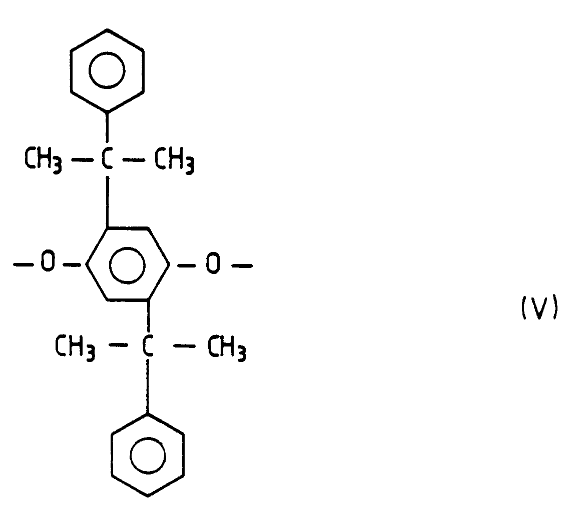
wherein the molar ratio of (IV +V)/(II +III) is from 0 to 4, preferably from 0.05 to 2.5, and more preferably from 0.1 to 2.5; whilst the molar ratio of (II)/(III) is from 0.5 to 1.8 and is preferably equal to 1; and wherein the molar amount of unit (V) does not exceed that of unit (IV).

The liquid-crystalline, thermotropic, aromatic polyesters of the present invention are optically anistropic in the molten state, as can be verified by means of optical microscopic analysis under polarized light. The polyesters suitably have an inherent viscosity, as measured in a 1:1 mixture of trifluoroacetic acid and methylene chloride at 30°C, at a concentration of 0.25 g/litre, of from 0.3 to 4 dl/g.

The melting temperature of the polyesters can vary widely according to the composition of the polymer and the degree of polymerization; generally, the melting temperature will be from 200 to 350°C.

The molecular weight and the crystallinity of the polyesters can be increased by heating the polymer particles in an inert medium, or under vacuum, at a temperature just under the melting point, for a time of from 1 to 20 hours.

The polyesters of the invention are well suited for use in obtaining manufactured articles which can be prepared by means of the usual thermoplastic polymer processing techniques such as, e.g., injection moulding or extrusion. The polyesters can be processed to yield films or fibres, can be used as matrices for composite materials containing inorganic fibres or fillers, and can be used in the preparation of blends with other polymers.

The polyesters of the invention can be prepared by reacting the appropriate starting materials (which are commercially available or readily preparable by conventional techniques of organic chemistry) by conventional techniques under normal conditions for the preparation of polyester resins.

For example, the polyesters can be obtained in the molten state, or in the presence of a dispersing medium having a high boiling point such as di-phenyl-sulphone or mixtures of partially hydrogenated terphenyls, by transesterification between the dicarboxylic aromatic acids and the acetates or propanoates of the phenols, at temperatures of from 270 to 370°C, so as to favour the complete release of the carboxylic release of the carboxylic acids, also operating under vacuum.

The reaction can be optionally carried out in the presence of a transesterification catalyst such as, e.g., an alkali metal or alkaline-earth metal phosphate. Further catalysts can be those which are commonly used in the polycondensation processes, and are described in "Encyclopaedia of Polymer Science and Technology" (1969, Vol. 10, pages 722-723). Examples of such catalysts are the oxides, hydroxides, hydrides, halides, alkoxides or phenates, the salts and the complex salts of the organic or inorganic acids of lithium, sodium, potassium, magnesium, calcium, titanium, manganese, cobalt, zinc, tin, antimony, lanthanum, cerium, lead and germanium.

The catalyst is suitably used in an amount of from 0.005 to 1 mole % preferably 0.01 to 0.2 mol % based on the total amount of the reactants.

In an alternative method, the polyesters can be obtained in solution, by polycondensation between the halides of the dicarboxylic aromatic acids and the mixture of the phenols in a suitable solvent. The temperature is suitably from 25 to 220°C, and the reaction is carried out in the presence of a base and/or of a stream of nitrogen in order to favour the elimination of the hydrogen halide. Among the bases, pyridine is preferred, whilst among the solvents, chlorinated solvents, both aliphatic and aromatic, are preferred, e.g. methylene chloride, chlorobenzene, dichloro-benzenes and trichloro-benzenes.

The resultant polymer is subsequently recovered by evaporating the solvent, or by precipitation with a non-solvent, and subsequent filtration.

In order that the invention may be well understood, the following Examples are given of way of illustration only.

### Example 1

To a 4-necked glass flask of 150 cc capacity, equipped with a mechanical stirrer, condenser, and nitrogen inlet tube, there were charged, under a slow nitrogen stream, 8.64 g (42.55 mM) of terephthalic acid dichloride 4.55 g (21.275 mM) of 1-phenylethyl-hydroquinone 4.85 g (21.275 mM) of (α-phenylisopropyl)-hydroquinone, and 170 cc of 1,2,4-trichlorobenzene.

The reaction mixture was kept for 20 minutes at room temperature with stirring and under a nitrogen stream, and then heating was started and the temperature increased to 220°C. The reaction mixture was maintained at this temperature for 16 hours, until the evolution of HCl had practically ceased. The mixture was then allowed to cool, still under a nitrogen stream and with stirring. When the reaction mixture reached a temperature of 50°C, the jelly-like mass was poured into acetone and the precipitate was filtered off. The resultant polymer was washed with acetone (twice), hot water (twice) and acetone/methanol (twice). The end product was dried under vacuum for 3 hours at 180-185°C.

The dried polymer had a melting temperature (Tₘ) of 332°C, and a crystallization temperature (T_{c}) of 281°C (the melting temperature and the crystallization temperature were determined by means of D.S.C. - Differential Scanning Calorimetry - at a scanning rate of 20°C/minute). The inherent viscosity was 0.68 (as measured at 30°C in a solvent composed by equal volumes of trifluoroactic acid and methylene chloride, at a concentration of 0.25 g/litre).

The molten polymer was optically anistropic when observed under a microscope under polarized light.

After heating for 5 hours at 290-300°C under a nitrogen stream, the polymer had a melting temperature (Tₘ) of 337°C, a crystallization temperature (T_{c}) of 286°C, and an inherent viscosity of 1.80. The crystallinity had increased from 13 to 20% by volume.

### Example 2

To a 4-necked glass flask as used in Example 1, there were charged,under a slow nitrogen stream, 6 g (29.55 mM) of terephthalic acid dichloride, 1.58 g (7.38 mM) of (1-phenylethyl)-hydroquinone, 2,348 g (7.38 mM) of 2,5-bis(phenyl-ethyl)-hydroquinone, 1.682 g (7.38 mM) of (α-phenylisopropyl)-hydroquinone, 2.553 g (7.38 mM) of 2.5-bis(α-phenylisopropyl)-hydroquinone and 130 cc of 1,2,4-trichloro-benzene.

The reaction mixture was kept for 20 minutes at room temperature with stirring and under a nitrogen stream, and then heating was started and the temperature was increased to 220°C. The reaction mixture was maintained at this temperature for 14 hours, until the evolution of HCl had practically ceased. The mixture was then allowed to cool, still under a nitrogen stream and with stirring. When the reaction mixture reached a temperature of 50°C, the jelly-like mass was poured into acetone and the prcipitate was filtered off. The resultant polymer was washed with acetone (twice), hot water (twice) and acetone/methanol (twice). The end product was dried under vacuum for 3 hours at 180-185°C.

The dried polymer had a glass transition temperature (T_{g}) of 145°C, a melting temperature (Tₘ) of 244°C and a crystallization temperature (T_{c}) of 193°C. The inherent viscosity was 0.95.

The molten polymer was optically anistropic when observed under a microscope under polarized light.

### Examples 3-5

Other polyesters were prepared according to the procedure described in Example 2.

The amounts of the reactants, expressed as moles, and the characteristics of the polyesters are listed in Table 1.

**TABLE 1**

| Example | (a) | (b) | (c) | (d) | (e) | η | Tₘ/°C | T_{c}/°C | T_{g}/°C |
|---|---|---|---|---|---|---|---|---|---|
| 3 | 1 | 0.15 | 0.15 | 0.35 | 0.35 | 0.67 | -- | -- | 151 |
| 4 | 1 | 0.35 | 0.35 | 0.15 | 0.15 | 1.27 | -- | -- | 150 |
| 5 | 1 | 0.40 | 0.40 | 0.10 | 0.10 | 1.43 | 276 | 216 | 153 |
| (a) = terephthalic acid dichloride (b) = (1-phenyl-ethyl)-hydroquinone (c) = (α-phenyl-isopropyl)-hydroquinone (d) = 2,5-bis(phenyl-ethyl)hydroquinone (e) = 2,5-bis(α-phenyl-isopropyl)hydroquinone η = intrinsic viscosity, measured at a temperature of 30°C in a solvent, composed of equal volumes of trifluoroacetic acid and methylene chloride at a concentration of 0.25 g/litre. Tₘ, T_{c}, T_{g} = the melting temperature, the crystallization temperature and the glass transition temperature respectively, as measured by D.S.C. (Differential Scanning Calorimetry), at a scanning rate of 20°C/minute. | | | | | | | | | |

The polymers of Examples 3 - 5, when observed under a microscope equipped with a heating stage under polarized light, were optically anistropic in the fluid state.

## Claims

1. A liquid-crystalline, thermotropic, aromatic polyester which comprises:
a) units derived from one or more aromatic or cycloaliphatic dicarboxylic acids;
b) units derived from a mixture of at least two hydroquinones which are mono-substituted with aralkyl groups containing at least 7 carbon atoms; and
c) possibly, units derived from one or more hydroquinones which are di-substituted with the aralkyl groups as defined under (b).

2. A polyester according to claim 1, characterised in that the aralkyl substituents on the hydroquinones, contain from 7 to 15 carbon atoms, and the aromatic or cycloaliphatic dicarboxylic acid comprises at least 90 mol.% of the isomeric form having the carboxy groups mutually parallel or coaxial.

3. A polyester according to claim 1 or claim 2, characterized in that the dicarboxylic acid is terephthalic acid, chloro- or bromo-terephthalic acid, methyl-terephthalic acid, 1,4-naphthalene-dicarboxylic acid, 1,5-naphthalene-dicarboxylic acid, 2,6-naphthalene-dicarboxylic acid, 4,4'-diphenyl-dicarboxylic acid, 3,3'-dibromo-4,4'-diphenyl-dicarboxylic acid, 4,4'-stilbene-dicarboxylic acid or cyclohexane-dicarboxylic acid.

4. A polyester according to any of the preceding claims, characterized in that the mono-aralkyl-substituted or di-aralkyl-substituted hydroquinones are selected from the group consisting of (1-phenyl-ethyl)-hydroquinone 2,5-bis(phenyl-ethyl)hydroquinone, 2- (α-phenyl-isopropyl)-hydroquinone or 2,5-bis(α-phenyl-isopropyl)-hydroquinone.

5. A polyester according to any of the preceding claims characterised in that the molar ratio, (c)/(b) of the units derived from the mono- and the di-substituted hydroquinones as defined under (b) and (c), respectively, is from 0 to 4, preferably from 0.05 to 2.5, and more preferably from 0.1 to 2.5.

6. A polyester according to any of the preceding claims, comprising the following repeating units: 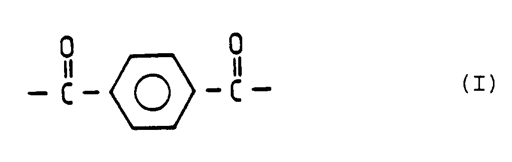 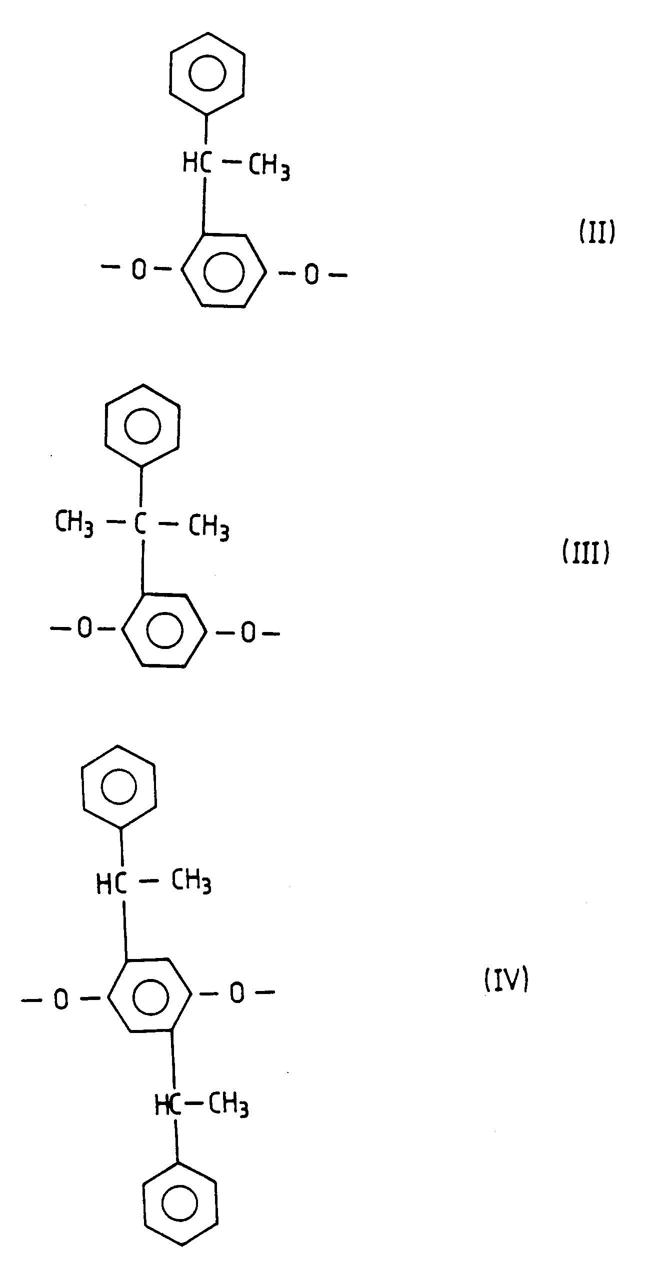 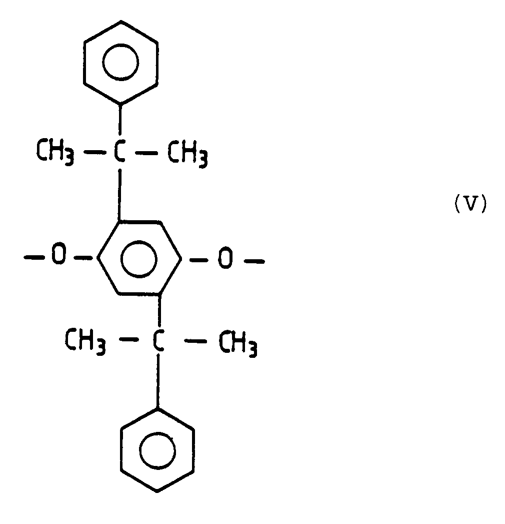 wherein the molar ratio of (IV + V)/(II + III) is from 0 to 4 (preferably from 0.05 to 2.5 and more preferably from 0.1 to 2.5); the molar ratio of (II)/(III) is from 0.5 to 1.8 (and is preferably equal to 1); and wherein the molar amount of unit (V) does not exceed that of unit (IV).

7. A polyester according to any of the preceding claims characterized in that it has an inherent viscosity, measured in a 1:1 mixture of trifluoroacetic acid and methylene chloride at 30°C, at a concentration of 0.25 g/litre, of from 0.3 to 4 dl/g, and has a melting temperature of from 200 to 350°C.

8. The use of a polyester according to any of the preceding claims in the form of a fibre, film, body formed by injection or extrusion, a matrix for composite materials based on inorganic fibres or fillers, or a mixture with other polymers.

## Patentansprüche

1. Flüssigkristalliner, thermotroper, aromatischer Polyester, umfassend:
(a) Einheiten, abgeleitet von einer oder mehreren aromatischen oder cycloaliphatischen Dicarbonsäuren;
(b) Einheiten, abgeleitet von einem Gemisch von mindestens zwei Hydrochinonen, die monosubstituiert sind mit mindestens 7 Kohlenstoffatome enthaltenden Aralkylgruppen; und
(c) gegebenenfalls Einheiten, abgeleitet von einem oder mehreren Hydrochinonen, die mit den Aralkylgruppen gemäß (b) disubstituiert sind.

2. Polyester nach Anspruch 1, dadurch gekennzeichnet, daß die Aralkylsubstituenten an den Hydrochinonen 7 bis 15 Kohlenstoffatome enthalten und die aromatische oder cycloaliphatische Dicarbonsäure mindestens 90 Mol-% der isomeren Form umfaßt, die zueinander parallel oder koaxial angeordnete Carbonsäuregruppen aufweist.

3. Polyester nach Anspruch 1 oder Anspruch 2, dadurch gekennzeichnet, daß die Dicarbonsäure Terephthalsäure, Chlor- oder Bromterephthalsäure, Methylterephthalsäure, 1,4-Naphthalindicarbonsäure, 1,5-Naphthalindicarbonsäure, 2,6-Naphthalindicarbonsäure, 4,4'-Diphenyldicarbonsäure, 3,3'-Dibrom-4'4'-diphenyldicarbonsäure, 4,4'-Stilbendicarbonsäure oder Cyclohexandicarbonsäure ist.

4. Polyester nach einem der vorangehenden Ansprüche, dadurch gekennzeichnet, daß die monoaralkylsubstituierten oder diaralkylsubstituierten Hydrochinone ausgewählt sind aus der Gruppe, bestehend aus (1-Phenylethyl)hydrochinon, 2,5-Bis(phenylethyl)hydrochinon, 2-(α-Phenylisopropyl)hydrochinon oder 2,5-Bis(α-phenylisopropyl)hydrochinon.

5. Polyester nach einem der vorangehenden Ansprüche, dadurch gekennzeichnet, daß das Molverhältnis (c)/(b), der von den mono- und den disubstituierten Hydrochinonen gemäß (b) bzw. (c) abgeleiteten Einheiten 0 - 4, vorzugsweise 0,05 - 2,5 und bevorzugter 0,1 - 2,5 beträgt.

6. Polyester nach einem der vorangehenden Ansprüche, umfassend die nachstehenden, sich wiederholenden Einheiten: 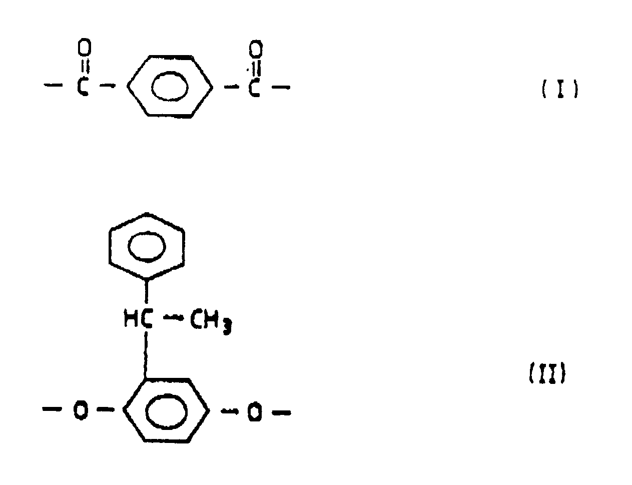 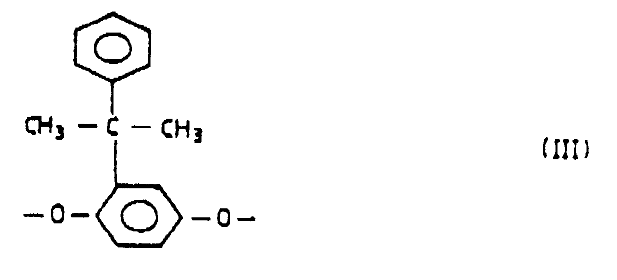 worin das Molverhältnis von (IV + V)/(II + III) 0 - 4 (vorzugsweise 0,05 - 2,5 und bevorzugter 0,1 - 2,5) beträgt; das Molverhältnis von (II/III) 0,5 - 1,8 beträgt (und vorzugsweise gleich 1 ist); und wobei die Molmenge der Einheit (V) nicht jene von Einheit (IV) übersteigt.

7. Polyester nach einem der vorangehenden Ansprüche, dadurch gekennzeichnet, daß er eine Eigenviskosität, gemessen in einem 1:1-Gemisch von Trifluoressigsäure und Methylenchlorid bei 30°C, bei einer Konzentration von 0,25 g/Liter, von 0,3 bis 4 dl/g aufweist und eine Schmelztemperatur von 200 bis 350°C aufweist.

8. Verwendung eines Polyesters nach einem der vorangehenden Ansprüche in Form einer Faser, Folie, eines Körpers, geformt durch Spritzen oder Extrusion, eines Grundstoffes für einen Verbundwerkstoff auf der Grundlage von anorganischen Fasern und Füllstoffen oder eines Gemisches mit anderen Polymeren.

## Revendications

1. Un polyester aromatique, thermotrope, sous forme de cristaux liquides, qui comprend:
a) des unités provenant d'un ou de plusieurs acides dicarboxyliques aromatiques ou cycloaliphatiques;
b) des unités provenant d'un mélange d'au moins deux hydroquinones qui sont monosubstituées par des radicaux aralkyle contenant au moins 7 atomes de carbone; et
c) éventuellement des unités provenant d'au moins une hydroquinone qui est disubstituée par des radicaux aralkyle tels que définis sous (b).

2. Un polyester selon la revendication 1, caractérisé en ce que les substituants aralkyle présents sur les hydroquinones comprennent de 7 à 15 atomes de carbone, et l'acide dicarboxylique aromatique ou cycloaliphatique comprend au moins 90% en moles de la forme isomère présentant les groupes carboxy réciproquement parallèles ou coaxiaux.

3. Un polyester selon la revendication 1 ou 2, caractérisé en ce que l'acide dicarboxylique correspond à: acide téréphtalique, acide chloro- ou bromotéréphtalique, acide méthyltéréphtalique, acide 1,4-naphtalène-dicarboxylique, acide 1,5-naphtalène-dicarboxylique, acide 2,6-naphtalène-dicarboxylique, acide 4,4'-diphényldicarboxylique, acide 3,3'-dibromo-4,4'-diphényldicarboxylique, acide 4,4'-stilbène-dicarboxylique ou acide cyclohexane-dicarboxylique.

4. Un polyester selon l'une quelconque des revendications précédentes, caractérisé en ce que les hydroquinones mono- ou disubstituées par des radicaux aralkyle sont sélectionnées dans le groupe consistant en: (1-phényl-éthyl)-hydroquinone, 2,5-bis(phényl-éthyl)-hydroquinone, 2-(α-phényl-isopropyl)-hydroquinone ou 2,5-bis(α-phényl-isopropyl)-hydroquinone.

5. Un polyester selon l'une quelconque des revendications précédentes, caractérisé en ce que le rapport molaire (c)/(b) des unités provenant des hydroquinones mono- et di-substituées telles que définies respectivement sous (b) et (c) est de 0 à 4, de préférence de 0,05 à 2,5 et plus avantageusement de 0,1 à 2,5.

6. Un polyester selon l'une quelconque des revendications précédentes, comprenant les unités répétées suivantes: 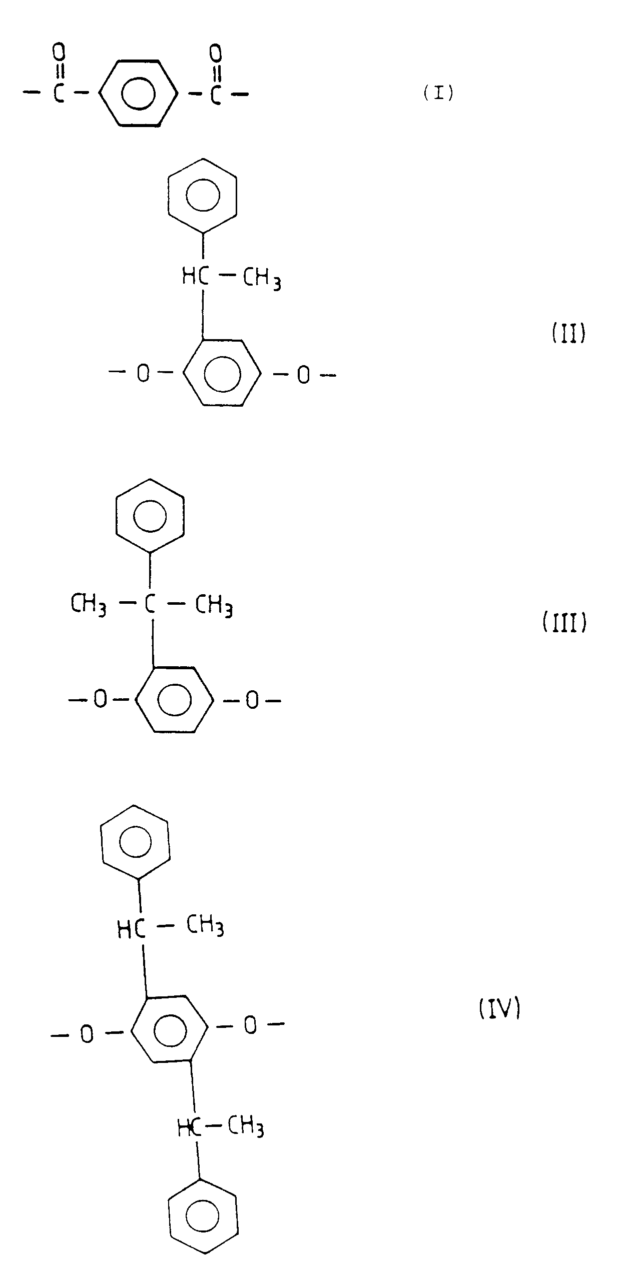 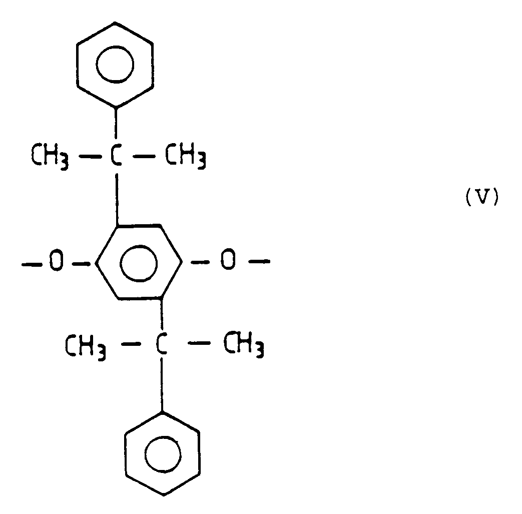 dans lequel le rapport molaire (IV+V)/(II+III) est de 0 à 4, (de préférence de 0,05 à 2,5 et plus avantageusement de 0,1 à 2,5); le rapport molaire (II)/(III) est de 0,5 à 1,8 (et de préférence égal à 1); et dans lequel la quantité moléculaire de l'unité (V) n'excède pas celle de l'unité (IV).

7. Un polyester selon l'une quelconque des revendications précédentes, caractérisé en ce qu'il présente une viscosité inhérente, mesurée dans un mélange 1/1 d'acide trifluoroacétique et de chlorure de méthylène à 30°C, à une concentration de 0,25 g/litre, de 0,3 à 4 dl/g et une température de fusion de 200°C à 350°C.

8. L'utilisation d'un polyester selon l'une quelconque des revendications précédentes, sous la forme d'une fibre, d'un film, d'un corps formé par injection ou extrusion, d'une matrice pour matériaux composites à base de charges ou de fibres inorganiques, ou d'un mélange avec d'autres polymères.
